# EUROPÄISCHE PATENTSCHRIFT

(11) **EP 0 533 710 B1**
(45) Veröffentlichungstag und Bekanntmachung des Hinweises auf die Patenterteilung: **23.03.1994**
(21) Anmeldenummer: 91910297.0
(22) Anmeldetag: 09.06.1991
(51) Int. Cl.: G06K 17/00, G06K 19/00

(54) **AUTOMATISCHES ERFASSUNGSSYSTEM**
AUTOMATIC CAPTURE SYSTEM
SYSTEME DE SAISIE AUTOMATIQUE

(30) Priorität: 09.06.1990 DE 4018520
(43) Veröffentlichungstag der Anmeldung: 31.03.1993
(73) Patentinhaber: FEMBÖCK, Josef, D-84524 Neuötting (DE)
(72) Erfinder: FEMBÖCK, Josef, D-84524 Neuötting (DE)
(74) Vertreter: Naumann, Ulrich, Dr.-Ing.
(86) Internationale Anmeldenummer: DE9100487
(87) Internationale Veröffentlichungsnummer: WO9120057

(56) Entgegenhaltungen:
- EP-A- 0 015 531
- EP-A- 0 186 820
- EP-A- 0 354 256
- WO-A-87/03119
- DE-U- 8 913 610

## Beschreibung

Die vorliegende Erfindung betrifft ein automatisches Erfassungssystem, insbesondere ein Erfassungssystem zum Erfassen von Müll, mit einem Behälter und einem zur Entleerung des Behälters dienenden Sammelbehälter.

Erfassungssysteme der in Rede stehenden Art sind in den unterschiedlichsten Ausführungsformen seit Jahrzehnten aus der Praxis bekannt. Solche Systeme werden überall dort verwendet, wo irgendwelche Festkörper oder Flüssigkeiten zunächst in Behältern gesammelt und anschließend in größeren Behältern - in Sammelbehältern - abtransportiert werden. Bereits hier sei betont, daß es sich bei den gesammelten Inhalten der Behälter bzw. Sammelbehälter um jegliche Flüssigkeiten, Festkörper, d.h. um Gegenstände oder dgl. handeln kann, die sich einerseits schütten, andererseits in irgendeiner Form sammeln lassen.

So ist es beispielsweise denkbar, daß mit dem eingangs genannten Erfassungssystem Weintrauben oder dgl. zunächst von einzelnen Personen in Behältern gesammelt werden und anschließend - bei gefülltem Behälter - zum Abtransport in einen Sammelbehälter geschüttet werden. Der Einsatzbereich solcher Systeme ist jedenfalls nicht durch spezielle Verwendungen beschränkt.

Nachfolgend wird das in Rede stehende, bekannte Erfassungssystem - lediglich beispielhaft - anhand der Müllentsorgung erläutert.

Die Müllbeseitigung ist derzeit eines unsrer schwerwiegendsten Umweltprobleme überhaupt. Fast alles, was heutzutage gekauft bzw. konsumiert wird, ist aufwendig verpackt, so daß bereits im Rahmen des täglichen Konsums eine erhebliche Menge Verpackungsmüll anfällt. Uberquellende Mülltonnen und überfüllte Mülldeponien sind die Folge.

Nun will man in zunehmendem Maße die privaten Haushalte dazu anhalten, den täglich anfallenden Müll nach Materialien zu trennen, um ein umweltschonendes Recycling der Rohstoffe zu ermöglichen. Abgesehen von der einem solchen Verhalten zugrundeliegenden umweltbewußten Geisteshaltung gibt es jedoch für die Bevölkerung derzeit keine Anreize, die aus den Haushalten und Unternehmen abzutransportierende Müllmenge wesentlich zu reduzieren. Die Nutzung eines Komposthaufens oder die getrennte Abgabe von Glas, Metall oder Papier reduzieren zwar bereits - bei besonders umweltbewußten Haushalten - die insgesamt anfallende Müllmenge, eine drastische Müllreduzierung bei der gesamten Bevölkerung, d.h. bei allen Haushalten, ist jedoch aufgrund stets zunehmender Entsorgungs- bzw. Lagerungskosten anzustreben.

Eine Möglichkeit zur Bekämpfung des zunehmenden Müllaufkommens wäre die Schaffung von entsprechenden Gesetzen und/oder Verordnungen. Dies bräuchte jedoch Zeit und würde sicherlich auf erheblichen politischen Widerstand stoßen.

Viel geeigneter erscheinen da in erster Linie monetäre Anreize zur Verringerung der insgesamt abzutransportierenden, nicht nach Rohstoffen getrennten oder trennbaren Müllmenge. Dazu ist jedoch das bestehende Gebührensystem der Kommunen wenig geeignet. Der Kunde, d.h. der Haushalt, zahlt nämlich derzeit einen Pauschalbetrag pro Mülltonne bzw. Container oder Großcontainer, ganz egal, ob die Mülltonne, der Container oder der Großcontainer leer, halbvoll oder gar überfüllt ist. Ein Anreiz dahingehend, eine beispielsweise wöchentlich zu entleerende Mülltonne nicht ganz aufzufüllen, besteht hier nicht.

Je weniger Müll - beispielsweise wöchentlich - abzutransportieren ist, desto weniger müßte der Kunde für den Abtransport zahlen müssen. Bei einer solchen Regelung wäre die Bevölkerung jedenfalls in monetärer Hinsicht motiviert, die Menge des nicht dem Recycling zuführbaren Mülls zu reduzieren, was sich sicherlich bis hin zu einem "verpackungsbewußten" Kaufverhalten der Konsumenten auswirken würde.

Der vorliegenden Erfindung liegt daher die Aufgabe zugrunde, ein Erfassungssystem der eingangs genannten Art, insbesondere ein Erfassungssystem im Rahmen des Abtransports von Müll, so auszugestalten und weiterzubilden, daß Sammelgut jeglicher Art unter einer dem Sammelnden zuordenbarer Registrierung des Gewichts des Sammelguts abtransportiert werden kann. Der vorliegenden Erfindung liegt weiter die Aufgabe zugrunde, ein Verfahren zum automatischen Erfassen von Müll anzugeben, das das erfindungsgemäße automatische Erfassungssystem nutzt.

Aus EP-A-0 186 820 sind alle Merkmale der Präambel des unabhängigen Anspruchs 1 bekannt. Darüberhinaus ist aus DE-U-8 913 610 ein drahtlos arbeitender, elektronischer Codeträger für Mülltonnen bekannt der das Identifizierungsmerkmal in verschlüsselter, nicht veränderbarer Form enthält, wobei das Identifizierungsmerkmal von einer Leseeinrichtung detektiert wird.

Das erfindungsgemäße automatische Erfassungssystem, bei dem die zuvor aufgezeigte Aufgabe gelöst ist, ist durch die Merkmale des Patentanspruches 1 beschrieben.

Erfindungsgemäß ist zunächst die Notwendigkeit erkannt worden, Sammelgut jeglicher Art unter Berücksichtigung des Gewichts des Sammelguts zu erfassen und abzutransportieren. Weiter ist erkannt worden, daß es dazu erforderlich ist, das ermittelte Gewicht dem jeweils Sammelnden zuzuordnen, um beispielsweise im Falle des Hausmülls eine den Abtransport von Müll betreffende Rechnung oder im Falle des Sammelns bzw. Erntens von Weintrauben eine leistungsabhängige Basis für die Lohnabrechnung der Erntearbeiter zu erhalten. Diese Zuordnung ist erfindungsgemäß dadurch möglich, daß einerseits dem Behälter des Sammelnden, also beispielsweise der Mülltonne, ein Identifizierungsmerkmal zugeordnet wird. Andererseits wird entsprechend dem Sammelbehälter eine Leseeinrichtung zum Erkennen bzw. Lesen des Identifizierungsmerkmals zugeordnet. Damit ist bereits die Identifizierung und Zuordnung möglich. Schließlich ist eine Wägeeinrichtung zum Wiegen des Behälters - vor und nach dem Entleeren - sowie ein Rechner mit einer Speichereinheit zum Speichern der Differenz des Gewichts des Behälters - vor und nach dessen Entleerung - erforderlich, so daß das Gewicht unter Zuordnung des Identifizierungsmerkmals abgespeichert bzw. weiterverarbeitet werden kann.

Bei einer einfachen Ausführungsform des erfindungsgemäßen Erfassungssystems handelt es sich bei dem Identifizierungsmerkmal um eine lesbare Identifizierungsnummer. Die dem Sammelbehälter zugeordnete Leseeinrichtung arbeitet dann lichtoptisch. Das Identifizierungsmerkmal bzw. die lesbare Identifizierungsnummer könnte auf den Behälter aufgeklebt oder aufgemalt bzw. aufgespritzt sein.

Das Identifizierungsmerkmal könnte jedoch ebenso in Form eines Barcodes am Behälter angebracht bzw. auf den Behälter aufgeklebt sein. Dieser Barcode müßte dann mit einer als Barcodelesestift ausgeführten Leseeinrichtung, die dem Sammelbehälter bzw. dem Rechner zugeordnet wäre, vom Bedienungspersonal abgelesen werden. Neben den bekannten Barcodes könnten jegliche denkbaren, vom Menschen lesbaren oder unlesbaren Codierungen verwendet werden, die sich zum lichtoptischen, automatischen Lesen mittels entsprechender Leseeinrichtung eignen.

Hinsichtlich einer EDV-gerechten Datenerfassung ist es nun besonders vorteilhaft, das Identifizierungsmerkmal verschlüsselt in einem Codeträger vorzusehen. Der Codeträger könnte dabei abnehmbar am Behälter angebracht sein. Damit der dem jeweiligen Behälter zugeordnete Codeträger von dem Sammelnden nicht ohne weiteres manipulierbar ist, ist es insoweit vorteilhaft, wenn der Codeträger ausschließlich mittels eines Spezialwerkzeugs vom Behälter abgenommen werden kann. Zur weiteren Absicherung gegen unbefugte Manipulationen könnte der Codeträger am Behälter verblombt sein.

Um den Aufwand mit der Absicherung des Codeträgers gegen Manipulationen oder gar Entfernen bzw. Austauschen zu verringern, könnte der Codeträger ortsfest, d.h. nicht entfernbar, am Behälter angebracht sein. In vorteilhafter Weise könnte dies dadurch erreicht werden, daß man den Codeträger als integralen Bestandteil des Behälters ausbildet. In einem solchen Falle würde dem Behälter, beispielsweise bereits bei seiner Herstellung, der Codeträger mit einem unveränderbaren Identifikationsmerkmal zugeordnet bzw. "einverleibt" werden.

Ebenso könnte der Codeträger in oder an einem Griff des Behälters integriert oder angebracht sein. Ein Vorteil dieser Anordnung des Codeträgers ist unter anderem darin zu sehen, daß der Griff des Behälters stets gut zugänglich ist, also auch der dort angebrachte bzw. vorgesehene Codeträger für die Leseeinrichtung gut zugänglich ist.

Insbesondere bei einer nachträglichen, also nicht integrierten Anordnung des Codeträgers ist es ratsam, diesen gegen Schadatmosphäre bzw. gegen Schmutz sowie gegen mechanische Überbeanspruchung zu schützen. Dabei ist es vorteilhaft, den Codeträger in ein Kunststoffgehäuse einzuschweißen, das im Falle eines lichtoptisch zu lesenden Identifikationsmerkmals selbstverständlich durchsichtig sein müßte.

Der Codeträger selbst könnte insbesondere im Hinblich auf eine ungehinderte Datenübertragung und weiterführende Datenverarbeitung in besonders vorteilhafter Weise als drahtlos arbeitender, elektronischer Codeträger ausgeführt sein. Dabei würde der Codeträger das Identifizierungsmerkmal in verschlüsselter, nicht veränderbarer Form enthalten, das die Leseeinrichtung kontaktlos liest.

Hinsichtlich der Energieversorgung eines solchen Codeträgers wäre es insbesondere hinsichtlich des erforderlichen Einbauraumes von Vorteil, wenn der Codeträger ohne eigene, d.h. interne Energieversorgung arbeiten würde. Um dies zu realisieren, könnte der Codeträger die erforderliche Energie beim Ablesevorgang induktiv über die Leseeinrichtung, beispielsweise mittels Hochfrequenzwellen, erhalten. Es sollte jedoch auch gewährleistet sein, daß das Identifizierungsmerkmal auch ohne Energiezufuhr, also auch bei längerem Zeitraum ohne induktive Energiezufuhr über die Leseeinrichtung, im Codeträger permanent gespeichert bleibt.

In besonders vorteilhafter Weise weist der Codeträger einen miniaturisierten Sender und der Sammelbehälter bzw. die Leseeinrichtung einen miniaturisierten Empfänger auf. Das Identifikationsmerkmal wird dann bei induktiver Energiezufuhr seitens der Leseeinrichtung zur Leseeinrichtung gesendet und vom dort vorgesehenen Empfänger aufgenommen. Eine solche Kombination von Sender und Empfänger würde den unerlaubten Zugriff bzw. die unerlaubte Manipulation am Codeträger erschweren.

Um jeglichen winterlichen und sommerlichen Temperaturen gerecht zu werden, sollte der Codeträger aus solchen Materialien bestehen, daß er in einem Temperaturbereich zwischen -30 °C und +75 °C störungsfrei arbeitet.

Damit das Bedienungspersonal des erfindungsgemäßen automatischen Erfassungssystems, insbesondere zur ordnungsgemäßen Rückgabe des Behälters, das Identifizierungsmerkmal ohne technische Hilfsmittel erkennen kann, ist es von großem Vorteil, wenn beispielsweise die Identifizierungsnummer zusätzlich am Codeträger bzw. am Behälter sichtbar, d. h. leserlich, angebracht ist.

Diese Vorkehrung ist insbesondere auch dann von großer Bedeutung, wenn der als drahtloser Datenspeicher dienende Codeträger an dem Behälter nicht richtig oder überhaupt nicht funktioniert. In einem solchen Falle sollte die Nummer bzw. das Identifizierungsmerkmal des zu entleerenden Behälters manuell eingebbar sein. Die Bedienungsperson kann ein aufgeklebtes Identifizierungsmerkmal, beispielsweise eine Nummer, ablesen und mittels einer Gegensprechanlage an eine Bedienungsperson der Speichereinheit weitergeben. Im Falle der Anwendung des erfindungsgemäßen Systems bei einem Müllabfuhrwagen würde ein Müllwerker bei Versagen des Codeträgers die jeweilige Nummer ablesen und über eine Gegensprechanlage dem Fahrer im Führerhaus mitteilen. Der Fahrer könnte diese Nummer dann über ein Tastenfeld zur Weiterverarbeitung eingeben.

Eine weitere Besonderheit liegt nun darin, daß die Gegensprechanlage - beim Versagen des Codeträgers - über einen Rechner automatisch eingeschaltet werden könnte. Da der Müllwerker insbesondere im Winter mit dicken Arbeitshandschuhen ausgestattet ist, ist die Bedienung des Tastenfelds durch den Fahrer besonders vorteilhaft, zumal dieser während des Entleerens des Müllbehälters ohnehin untätig ist.

Im Rahmen einer bereits zuvor erwähnten, besonders bevorzugten Anwendung des erfindungsgemäßen Erfassungssystems geht es um den Abtransport von Müll. Dabei handelt es sich bei dem Behälter um einen Müllbehälter bzw. um eine Mülltonne oder einen Müllcontainer. Der Sammelbehälter wäre dann in für sich bekannter Weise einem Müllabfuhrwagen zugeordnet. Das Bedienungspersonal des Müllabfuhrwagens würde die Mülltonne oder dgl. in bekannter Weise im Müllabfuhrwagen entleeren. Daran ändert sich auch gemäß der erfindungsgemäßen Lehre nichts.

Zum Heben des Müllbehälters weist der Müllabfuhrwagen in bekannter Weise eine Hubmechanik auf. Zur Ermittlung des Gewichts des vollen und des entleerten Müllbehälters weist die Hubmechanik wiederum Kraftsensoren auf, damit das Gewicht der vollen Mülltonne und der entleerten Mülltonne während des Hochhebens bzw. Absetzens der Mülltonne auf einfache Weise ermittelbar ist.

Um nun in erfindungsgemäßer Weise dynamisch wiegen zu können, muß beim Aufheben des Müllbehalters - zur Vermeidung einer fehlerhaften Gewichtsermittlung - die Erdbeschleunigung bzw. die Masseträgheit berücksichtigt werden. Andernfalls müßte in einer Arbeitsphase gewogen werden, in der weder eine Geschwindigkeitszunahme noch eine Geschwindigkeitsabnahme auftritt, in der also weder positive noch negative Beschleunigungen auftreten. Zur Realisierung einer solchen dynamischem Gewichtsermittlung ist in besonders vorteilhafter Weise - unter Elimination der Masseträgheit bzw. Erdbeschleunigung - mindestens ein vorzugsweise der Hubmechanik zugeordneter Beschleunigungssensor vorgesehen. Der Beschleunigungssensor nimmt die Fahrtgeschwindigkeit des Müllbehälters auf und korrigiert entsprechend das Wägeergebnis unter Berücksichtigung der negativen oder positiven Beschleunigung. Als Sensor dient hier beispielsweise ein handelsüblicher Beschleunigungsaufnehmer oder ein normaler Kraftaufnehmer. Neben dem Beschleunigungssensor kann in vorteilhafter Weise auch ein Neigungssensor vorgesehen sein. Bei der Gewichtsermittlung geschieht dazu folgendes:

Ein bekanntes Gewicht (Totlast) erfährt diegleiche Beschleunigung wie der zu entleerende Müllbehälter mit dem darin befindlichen Müll. Wird nun beim Anheben des Müllbehälters beschleunigt, so nimmt das Gewicht des Wägebehälters mit dem darin befindlichen Müll im gleichen Verhältnis wie das Gewicht der Totlast beim Referenzsensor - prozentual - zu. Die durch negative oder positive Beschleunigung hervorgerufene Gewichtsveränderung des im Müllbehälter befindlichen Mülls mit unbekanntem Gewicht kann dadurch kompensiert werden. Ebenso lassen sich nach der in Rede stehenden Methode jegliche Beeinflussungsfaktoren der Gewichtsermittlung, beispielsweise auch Fahrzeugschwingungen, in vorteilhafter Weise kompensieren. Selbstverständlich ist die Anwendung der voranstehend erläuterten Kompensation der Dynamik bei der Gewichtsermittlung nicht auf den Anwendungsfall der Müllentsorgung begrenzt.

Bei der Ermittlung des Gewichts im Hubvorgang tritt jedoch das Problem auf, daß jeglicher am Müllbehälter haftender Ballast, beispielsweise Schnee im Winter, mitgewogen wird. Beim Entleeren des Müllbehälters fällt dieser Ballast ab, wird also zu dem Gewicht des Schüttguts hinzugerechnet. Der Kunde würde demnach für den beim Entleeren abgefallenen Schnee bezahlen.

Abhilfe bzgl. des voranstehend genannten Problems kann dadurch geschaffen werden, daß ein Zwischenbehälter vorgesehen ist. Der Inhalt des Müllbehälters (1) wird dann zunächst in den Zwischenbehälter geleert, also nicht während des eigentlichen Hebevorgangs gewogen. Der Zwischenbehälter mit dem darin befindlichen, abzutransportierenden Schüttgut wird anschließend - befreit von jeglichem Ballast - gewogen. Im übrigen hat diese Weiterbildung der erfindungsgemäßen Lehre den großen Vorteil, daß bei Mehrkammermüllbehältern voneinander getrenntes Schüttgut gesondert gewogen werden kann.

Desweiteren ist dem Sammelbehälter bzw. dem Müllabfuhrwagen in besonders vorteilhafter Weise ein Schüttungsrechner zugeordnet. Das das Gewicht des vollen und des entleerten Müllbehälters darstellende Signal der Kraftsensoren gelangt vorzugsweise über einen Meßverstärker an diesen Schüttungsrechner, der wiederum die Hubmechanik steuert.

Der Meßverstärker verfügt im Hinblick auf eine Datenweiterverarbeitung über eine programmierbare Intelligenz im Sinne eines Rechners bzw. Microprozessors. Der Mikroprozessor des Meßverstärkers linearisiert die Meßsignale und führt ggf. eine Temperaturkompensation und ggf. eine Fehlerkorrektur durch.

Zur Gewährleistung eines gewissen Bedienungskomforts ist es von Vorteil, wenn der Schüttungsrechner mit einer LCD-Anzeige und einem Tastenfeld ausgestattet ist. Die LCD-Anzeige könnte beispielsweise den momentanen Betriebsmodus des Schüttungsrechners, aber auch das Identifizierungsmerkmal der gerade zu entleerenden Mülltonne anzeigen. Über das Tastenfeld könnte man manuell Daten oder Befehle eingeben. Eine solche Eingabe wäre beispielsweise dann erforderlich, wenn - aus welchen Gründen auch immer - das Identifizierungsmerkmal nicht mehr elektronisch lesbar wäre. Das Bedienungspersonal müßte dann das Identifizierungsmerkmal bzw. die Identifizierungsnummer ablesen und manuell über das Tastenfeld eingeben. Auch wäre es denkbar, daß bei Nichterkennen des Identifizierungsmerkmals der Kundename eingegeben wird, dem dann rechnerintern - automatisch - das richtige gespeicherte Identifizierungsmerkmal zugeordnet wird.

Der Schüttungsrechner leitet in vorteilhafter Weise die Meßsignale an einen vorzugsweise im Führerhaus des Müllabfuhrwagens angeordneten Bordrechner weiter. Der Bordrechner weist einen Mikroprozessor und vorzugsweise eine interne Uhr auf. Desweiteren kann der Bordrechner so in das Erfassungssystem integriert sein, daß er die Schüttung und den Schüttungsrechner koordiniert.

Bei Bedarf ist an den Bordrechner ein Protokolldrucker angeschlossen. Dieser Protokolldrucker dient einerseits der sofortigen Anfertigung eines Fahrtenberichts des Müllabfuhrwagens, andererseits kann er die ermittelten Daten in Schriftform sichern, für den Fall, daß die gesamten elektronisch gespeicherten Daten aufgrund eines Systemfehlers verlorengehen.

Hinsichtlich der insgesamt zu erfassenden Daten ist es von Vorteil, wenn neben dem Gewicht und dem Identifizierungsmerkmal des Müllbehälters auch die Fahrzeugnummer des Müllabfuhrwagens und die Uhrzeit der Entleerung erfaßt und im Bordrechner gespeichert werden. Dies dient insbesondere der Dokumentation der durch die Leerung der Mülltonnen erbrachten Leistung. Darüberhinaus können im Bordrechner beliebige, vom Bedienungspersonal vorgebbare Informationen unter Zuordnung zu dem Identifizierungsmerkmal gespeichert werden.

Hinsichtlich der Datensicherung und der Weitergabe der Daten ist es besonders vorteilhaft, wenn der Bordrechner mobile Speicherkarten als Ausgabemedium aufweist. Diese Speicherkarten dienen dann gleichzeitig als Eingabemedium für einen vorzugsweise stationären Zentralrechner.

Zur einfacheren Handhabung könnten die mobilen Speicherkarten in Scheckkartenformat ausgeführt sein. Auch wäre es denkbar, daß die Speicherkarten eine eigene Energieversorgung in Form einer Miniaturbatterie aufweisen. Ebenfalls hinsichtlich der Datensicherung könnte in besonders vorteilhafter Weise die Speicherkarte durch eine Abschirmung gegen Überspannung und Spannungsentladung geschützt sein.

Die mittels des erfindungsgemäßen Erfassungssystems ermittelten und ggf. im Bordrechner gespeicherten Daten können unter Verzicht auf eine weitere Datenübertragung mittels Speicherkarten auf besonders elegante Weise per Funk direkt an eine vorzugsweise stationäre Zentrale mit einem Zentralrechner übermittelt werden. Ebenso können diese Daten auch mittels Infrarotlicht direkt an die vorzugsweise stationäre Zentrale übermittelt werden, wobei hier eine unmittelbare Nähe zur Zentrale erforderlich ist.

Der Zentralrechner müßte im Falle der Datenübertragung mittels Speicherkarten ein Kartenlesegerät zum Ablesen der mobilen Speicherkarten aufweisen. Zum Erstellen der Rechnungen bzw. zum Erstellen von Statistiken, Graphiken oder dgl. könnte desweiteren ein Drucker zum Ausdrucken der im Zentralrechner aufbereiteten Daten vorgesehen sein.

Nun kann die Hubmechanik auch zur Leerung zweier Behälter bzw. Mülltonnen oder Container, d.h. zur Doppelschüttung, ausgebildet sein. Dann ist es hinsichtlich des Erhalts einer stets geforderten Wägegenauigkeit von besonderem Vorteil, wenn die vorzugsweise als Hydrauliksteuerung ausgeführte Steuerung für die Hubmechanik mit dem Bordrechner vernetzt ist. Dadurch wird nämlich eine Synchronisierung der Wiegung und der Steuerung der Hydraulik realisiert, so daß die Wägeeinrichtung nur bei der Meßphase und nicht beim Hubvorgang arbeitet.

Im Rahmen einer weiter vorteilhaften Ausgestaltung kann der Behälter bzw. der Müllbehälter oder die Mülltonne mindestens zwei voneinander getrennte Kammern aufweisen, was insbesondere unter ökologischen Gesichtspunkten zu bevorzugen ist. In den Kammer ist dann der Müll nach Müllarten getrennt und der Sammelbehälter nimmt die Müllarten entsprechend getrennt auf.

Um nun die Inhalte des bzw. der Behälter sicher überprüfen zu können, wird in besonders vorteilhafter Weise der Inhalt des zu entleerenden Behälters bzw. der zu entleerenden Behälter über ein vorzugsweise der Hubmechanik zugeordnetes Kamerasystem detektiert. Stattdessen oder zusätzlich kann der Inhalt des Behälters auch über einen vorzugsweise der Hubmechanik zugeordneten Metallsensor hinsichtlich Metall detektiert werden. Auch die Vorkehrung chemische oder spektralanalytisch arbeitender Sensoren zur Detektion von Farben, Lacke und sonstigen Chemikalien ist möglich.

Damit nun bedenkliche Inhalte des Behälters nicht mit dem sogenannten Restmüll im Sammelbehälter vermengt werden, ist eine besondere Vorrichtung zum Aussondern bzw. Separieren von detektiertem Sondermüll vorgesehen.

Desweiteren könnte der Inhalt des Behälters hinsichtlich seines Volumens vorzugsweise mittels Füllstandssensoren detektiert werden. Die Füllstandssensoren könnten dabei induktiv, kapazitiv oder nach dem Wirbelstromprinzip arbeiten. Bei kapazitiv arbeitenden Füllstandssensoren könnten diese in vorteilhafter Weise als Kapazitivleiste ausgeführt sein. Die Füllstandssensoren könnten jedoch auch lichtoptisch arbeiten.

Im Falle eines mindestens zweikammrigen Behälters sollten die jeweiligen Kammern unabhängig voneinander detektiert werden.

Desweiteren ist es von besonderem Vorteil, wenn die Komponenten des Erfassungssystem über ein vorzugsweise serielles Feldbus-System, galvanisch entkoppelt, miteinander verbunden sind.

Schließlich könnte der Codeträger neben dem Identifizierungsmerkmal einen Lese-/Schreib-Speicher aufweisen. Die Leseeinrichtung wäre dann entsprechend als Lese-/Schreibeinrichtung ausgeführt. Die beim Entleeren des Behälters insgesamt detektierten Daten könnten dann über die Lese-/Schreibeinrichtung in den Speicher geschrieben werden, so daß dem Behälter stets kummulierte Daten zugeordnet werden, die ggf. vom Besitzer des Behälters zur Kontrolle abgerufen werden können.

Der ein Verfahren betreffende Teil der der erfindungsgemäßen Lehre zugrundeliegenden Aufgabe wird dadurch gelöst, daß ein Verfahren zum automatischen Erfassen von Müll die Verfahrensschritte des Anspruchs 10 aufweist.

Es gibt nun verschiedene Möglichkeiten, den Gegenstand der vorliegenden Erfindung in vorteilhafter Weise auszugestalten und weiterzubilden. Dazu ist einerseits auf die nachgeordneten Patentansprüche 2 bis 49 bzw. 51, andererseits auf die Erläuterung eines Ausführungsbeispiels des Gegenstandes anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen der Lehre erläutert. In der Zeichnung zeigt
- Fig. 1: in einem Diagramm, schematisch, die Funktionsweise eines erfindungsgemäßen automatischen Erfassungssystems am Beispiel der Müllabfuhr,
- Fig. 2: in einer schematischen Darstellung einen Müllabfuhrwagen mit Schüttungsrechner und Bordrechner,
- Fig. 3: in einem Diagramm eine ähnliche Darstellung wie in Fig. 1, wobei das Zusammenwirken zwischen Müllbehälter, Schüttungsrechner und Bordrechner hervorgehoben ist,
- Fig. 4: in einem Diagramm, schematisch, die Steuerung der Schüttung bzw. des Schüttungsrechners über den Bordrechner,
- Fig. 5: in einer schematischen Darstellung die zur Zentrale bzw. zum Zentralrechner geleiteten, dem Identifizierungsmerkmal zugeordneten Daten,
- Fig. 6: in einer schematischen Darstellung den Zentralrechner mit Peripherie,
- Fig. 7: in vereinfachter Form eine mit dem erfindungsgemäßen automatischen Erfassungssystem generierbare Müllrechnung und

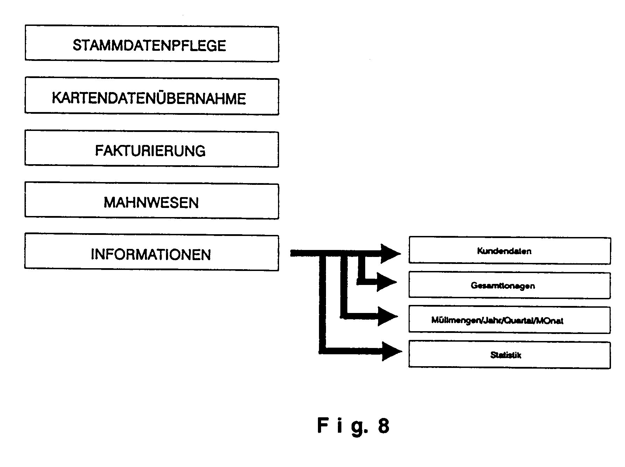

- Fig. 8: in einem Diagramm, schematisch, weitere Möglichkeiten zur Weiterverarbeitung der im Zentralrechner gespeicherten bzw. aufbereiteten Daten.

Die Fig. zeigen am Beispiel der Müllabfuhr die Funktionsweise des erfindungsgemäßen automatischen Erfassungssystems.

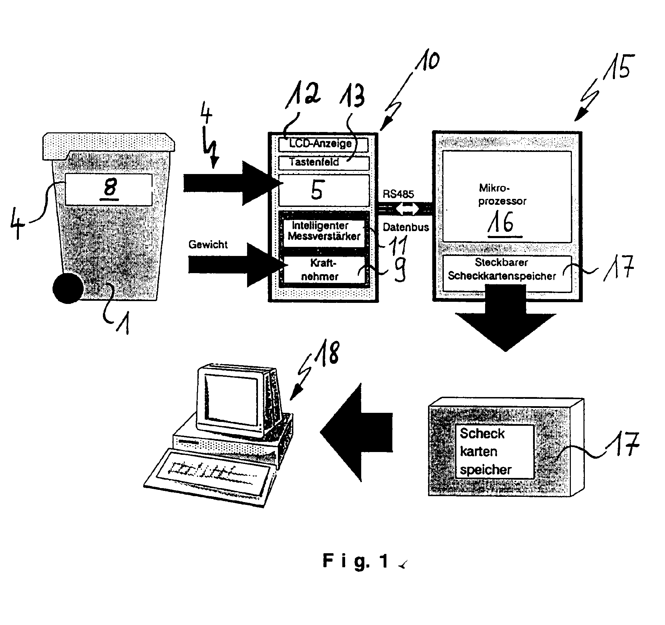

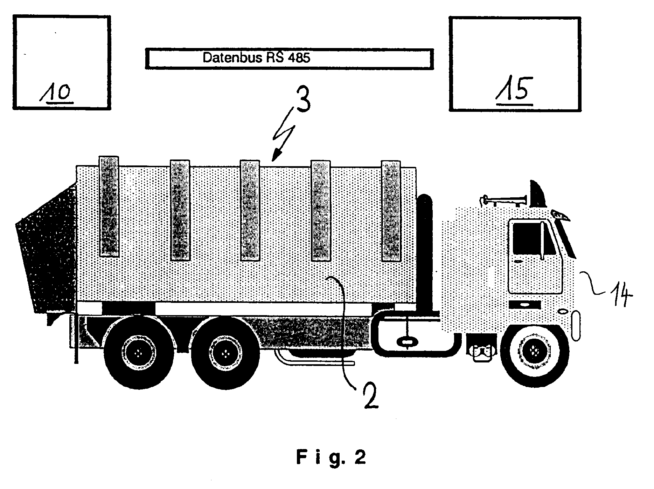

Fig. 1 zeigt in einer schematischen Darstellung das Zusammenwirken der einzelnen Komponenten des erfindungsgemäßen Erfassungssystems. Müll wird aus einem als Mülltonne 1 ausgeführten Behälter in einen einem Müllabfuhrwagen 2 zugeordneten Sammelbehälter 3 entleert. Der Sammelbehälter 3 ist gemäß der Darstellung in Fig. 2 integraler Bestandteil des Müllabfuhrwagens 2.

Erfindungsgemäß ist dem Behälter bzw. der Mülltonne 1 ein Identifizierungsmerkmal 4 zugeordnet. Dem Sammelbehälter 3 ist entsprechend eine Leseeinrichtung 5 zum Erkennen bzw. Lesen des Identifizierungsmerkmals 4 zugeordnet. Eine Wägeeinrichtung 9 dient zum wiegen der Mülltonne 1 vor und nach dem Entleeren. Ein Rechner 15 mit einer Speichereinheit dient zum Speichern der Differenz des Gewichts der Mülltonne vor und nach dessen Entleerung unter Zuordnung des Identifizierungsmerkmals 4.

In dem in den Fig. bevorzugten Auführungsbeispiel ist das Identifizierungsmerkmal verschlüsselt in einem nicht dargestellten Codeträger enthalten. Der Codeträger ist ortsfest an der Mülltonne 1 angebracht bzw. ist integraler Bestandteil der Mülltonne 1.

Der Codeträger ist ein drahtlos arbeitender, elektronischer Codeträger und enthält das Identifizierungsmerkmal 4 in verschlüsselter, nicht veränderbarer Form. Die Leseeinrichtung 5 liest das Identifizierungsmerkmal 4 kontaktlos.

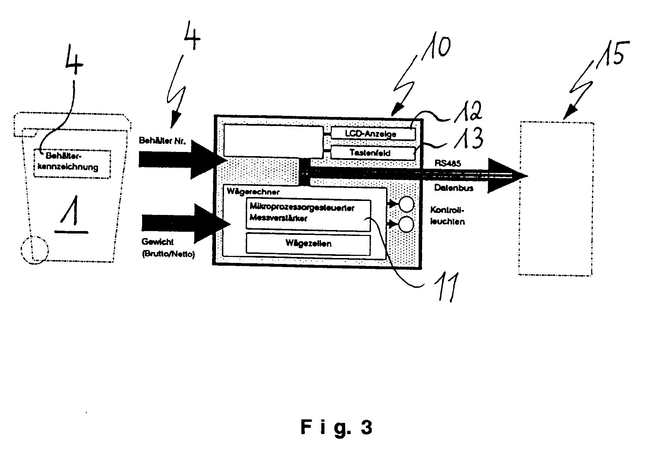

Fig. 1 und 3 zeigen deutlich, daß das Identifizierungsmerkmal 4 in Form einer Identifizierungsnummer 8 zusätzlich an der Mülltonne 1 - sichtbar - angebracht ist.

Bei dem in den Fig. gezeigten Ausführungsbeispiel handelt es sich - wie zuvor bereits gesagt - bei dem Behälter um einen Müllbehälter bzw. um eine Mülltonne 1. Der Sammelbehälter 3 ist dem in Fig. 2 schematisch gezeigten Müllabfuhrwagen 2 zugeordnet. Im Detail sind hier folgende weiteren Merkmale verwirklicht, die im Lichte der erfindungsgemäßen Lehre vorteilhafte Ausgestaltungen und Weiterbildungen darstellen.

Der Müllabfuhrwagen 2 weist zum Heben der Mülltonne 1 eine Hubmechanik auf, die wiederum zur Ermittlung des Gewichts der vollen und der entleerten Mülltonne 1 Kraftsensoren 9 aufweist.

Gemäß den Darstellungen in den Fig. 1 und 3 ist dem Müllabfuhrwagen 2 ein Schüttungsrechner 10 zugeordnet. Das das Gewicht der vollen und der entleerten Mülltonne 1 darstellende Signal der Kraftsensoren 9 gelangt vorzugsweise über einen Meßverstärker 11 an den Schüttungsrechner 10, der wiederum die Hubmechanik steuert. Der Meßverstärker 11 kann dabei integraler Bestandteil des Schüttungsrechners 10 sein. Der Meßverstärker 11 weist eine programmierbare Intellegenz im Sinne eines Rechners bzw. Mikroprozessors auf. Der Mikroprozessor des Meßverstärkers 11 linearisiert die Meßsignale, und nimmt ggf. eine Temperaturkompensation sowie eine Fehlerkorrektur vor.

Der Schüttungsrechner 10 ist mit einer LCD-Anzeige 12 und einem Tastenfeld 13 ausgestattet. Die LCD-Anzeige 12 zeigt den momentanen Betriebsmodus des Schüttungsrechners 10 an. Über das Tastenfeld 13 sind manuell weitere Daten oder Befehle eingebbar.

Die Fig. 1 und 3 zeigen weiter, daß der Schüttungsrechner 10 die Meßsignale an einen vorzugsweise im Führerhaus 14 des Müllabfuhrwagens 2 angeordneten Bordrechner 15 weiterleitet.

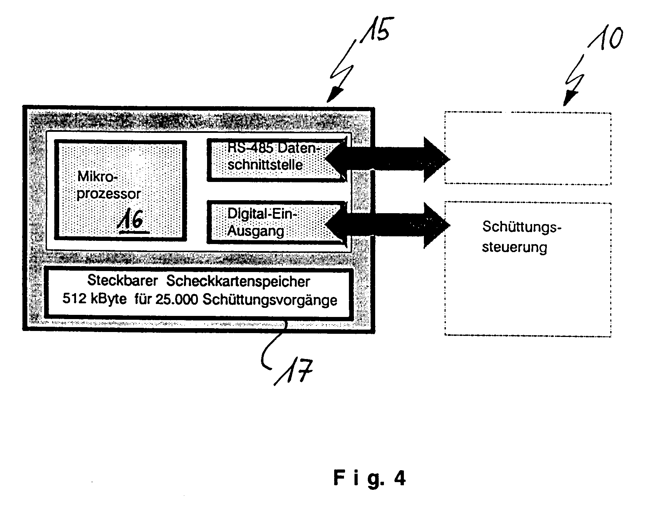

Der Bordrechner 15 weist gemäß der Darstellung in Fig. 4 einen Mikroprozessor 16 und vorzugsweise eine interne Uhr auf. Der Bordrechner 15 koordiniert die Schüttung und den Schüttungsrechner 10.

An den Bordrechner 15 ist ein in den Fig. nicht gezeigter Protokolldrucker anschließbar.

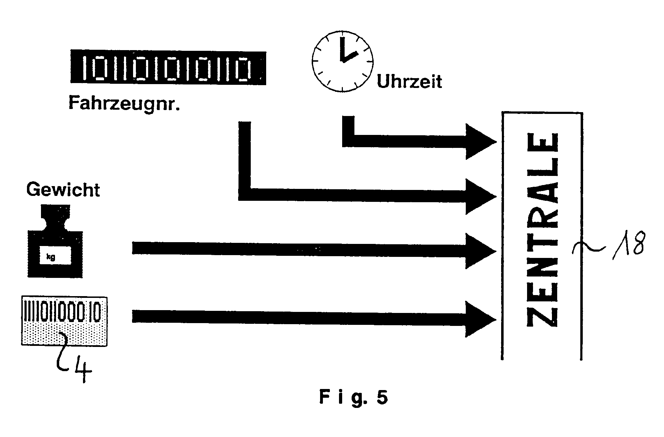

Gemäß der schematischen Darstellung in Fig. 5 können neben dem Gewicht und dem Identifizierungsmerkmal der Mülltonne 1 auch die Fahrzeugnummer des Müllabfuhrwagens 2 und die Uhrzeit der Entleerung erfaßt und im Bordrechner 15 gespeichert werden.

Im übrigen lassen sich im Bordrechner 15 beliebige, vom Bedienungspersonal vorgebbare Informationen unter Zuordnung zu dem Identifizierungsmerkmal 4 speichern.

In den Fig. 1 und 4 ist angedeutet, daß der Bordrechner 15 mobile Speicherkarten 17 als Ausgabemedium aufweist. Die Speicherkarten 17 dienen als Eingabemedium für einen vorzugsweise stationären Zentralrechner 18, der in aller Regel in einem städtischen oder kommunalen Verwaltungsgebäude untergebracht ist. Die mobilen Speicherkarten 17 sind vorzugsweise in Scheckkartenformat ausgeführt.

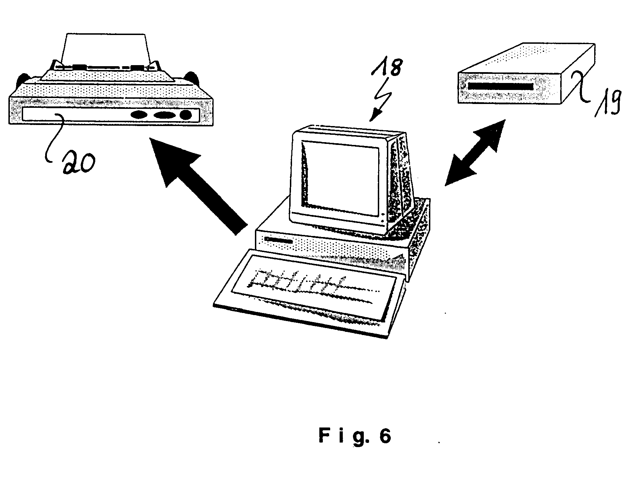

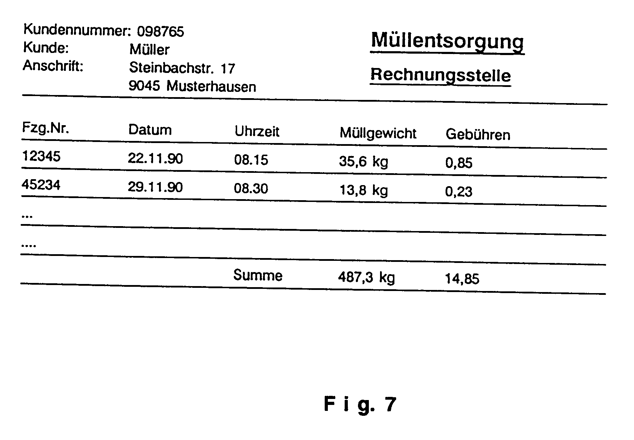

Der Zentralrechner 18 weist gemäß der Darstellung in Fig. 6 ein Kartenlesegerät 19 zum Ablesen der mobilen Speicherkarten 17 und einen Drucker 20 zum Ausdrucken der im Zentralrechner 18 aufbereiteten Daten, beispielsweise in Form von Rechnungen, auf. Fig. 7 zeigt eine mögliche Ausgestaltung eines solchen Ausdrucks bzw. einer solchen Rechnung, wobei hier - der Transparenz wegen - die Fahrzeugnummer des Müllabfuhrwagens 2, das Datum und die Uhrzeit der Müllabholung, das Gewicht des entleerten Mülls und die Gebühren aufgelistet sind.

Selbstverständlich lassen sich die im Zentralrechner 18 aufbereiteten Daten, auch zur weiteren Informationsaufbereitung verwenden, so daß neben der Fakturierung oder dem Mahnwesen auch ausgiebige, informative Kundendateien und Statistiken generiert werden können.

Abschließend sei hier hervorgehoben, daß die erfindungsgemäße Lehre durch das voranstehend beschriebene Ausführungsbeispiel lediglich erläutert, aber keinesfalls beschränkt wird.

## Patentansprüche

1. Automatisches Erfassungssystem zum Erfassen von Müll, mit einem als Müllbehälter bzw. Mülltonne ausgeführten Behälter (1) und einem zur Entleerung des Behälters (1) dienenden, einem Müllabfuhrwagen (2) zugeordneten Sammelbehälter (3), Wobei der Müllabfuhrwagen (2) zum Heben des Behälters (1) eine Hubmechanik und zur Ermittlung des Gewichts des vollen und des entleerten Müllbehälters (1) die Hubmechanik Kraftsensoren (9) aufweist, wobei dem Behälter (1) ein Identifizierungsmerkmal (4) und dem Sammelbehälter (3) eine Leseeinrichtung (5) zum Erkennen bzw. Lesen des Identifizierungsmerkmals (4), eine Wägeeinrichtung (6) zum Wiegen des Behälters (1) vor und nach dem Entleeren sowie ein Rechner (7) mit einer Speichereinheit zum Speichern der Differenz des Gewichts des Behälters (1) vor und nach dessen Entleerung unter Zuordnung des Identifizierungsmerkmals (4) zugeordnet ist,
**dadurch gekennzeichnet**, daß das Identifizierungsmerkmal (4) verschlüsselt in einem Codeträger enthalten ist, daß der Codeträger ein drahtlos arbeitender, elektronischer Codeträger ist, der das Identifizierungsmerkmal (4) in verschlüsselter, nicht veränderbarer Form enthält, daß die Leseeinrichtung (5) das Identifizierungsmerkmal (4) detektiert, daß zur Ermittlung des Gewichts unter Elimination der Masseträgheit mindestens ein vorzugsweise der Hubmechanik zugeordneter Beschleunigungssensor vorgesehen ist und daß der Beschleunigungssensor die Beschleunigung des Müllbehälters (1) aufnimmt und das Wägeergebnis unter Berücksichtigung der negativen oder positiven Beschleunigung korrigiert.

2. Erfassungssystem nach Anspruch 1, dadurch gekennzeichnet, daß zur korrigierten Ermittlung des Gewichts unter Elimination der Masseträgheit neben dem der Hubmechanik zugeordneten Beschleunigungssensor mindestens ein Neigungssensor vorgesehen ist.

3. Erfassungssystem nach Anspruch 1, dadurch gekennzeichnet, daß ein Zwischenbehälter vorgesehen ist, daß der Inhalt des Müllbehälters (1) zunächst in den Zwischenbehälter geleert wird und daß der Zwischenbehälter mit dem Schüttgut gewogen wird.

4. Erfassungssystem nach Anspruch 1 oder 2, dadurch gekennzeichnet, daß dem Sammelbehälter (3) bzw. dem Müllabfuhrwagen (2) ein Schüttungsrechner (10) zugeordnet ist, daß das jeweils das Gewicht des vollen und des entleerten Müllbehälters (1) darstellende Signal der Kraftsensoren (9) vorzugsweise über einen Meßverstärker (11) an den Schüttungsrechner (10) gelangt, der wiederum die Hubmechanik steuert, daß der Meßverstärker (11) eine programmierbare Intelligenz im Sinne eines Rechners bzw. Microprozessors aufweist und daß der Mikroprozessor des Meßverstärkers (11) die Meßsignale linearisiert, temperaturkompensiert und ggf. eine Fehlerkorrektur vornimmt.

5. Erfassungssystem nach einem der Ansprüche 1 bis 4, dadurch gekennzeichnet, daß der Schüttungsrechner (10) die Meßsignale an einen vorzugsweise im Führerhaus (14) angeordneten Bordrechner (15) weiterleitet, daß der Bordrechner (15) einen Mikroprozessor (16) und vorzugsweise eine interne Uhr aufweist und die Schüttung und den Schüttungsrechner (10) koordiniert und daß an den Bordrechner (15) vorzugsweise ein Protokolldrucker angeschlossen ist.

6. Erfassungssystem nach Anspruch 5, dadurch gekennzeichnet, daß neben dem Gewicht und dem Identifizierungsmerkmal (4) des Müllbehälters (1) auch die Fahrzeugnummer des Müllabfuhrwagens (2) und die Uhrzeit der Entleerung erfaßt und im Bordrechner (15) gespeichert werden, daß im Bordrechner (15) beliebige, vom Bedienungspersonal vorgebbare Informationen unter Zuordnung zu dem Identifizierungsmerkmal (4) speicherbar sind, daß der Bordrechner (15) mobile Speicherkarten (17) als Ausgabemedium aufweist und daß die Speicherkarten (17) als Eingabemedium für einen vorzugsweise stationären Zentralrechner (18) dienen, daß die mobilen Speicherkarten (17) vorzugsweise in Scheckkartenformat ausgeführt sind, daß die Speicherkarten (17) eine eigene Energieversorgung in Form einer Batterie aufweisen und daß die Speicherkarte (17) durch eine Abschirmung gegen Überspannung und Spannungsentladung geschützt ist.

7. Erfassungssystem nach Anspruch 5 oder 6, dadurch gekennzeichnet, daß die an den Bordrechner (15) geleiteten bzw. im Bordrechner (15) gespeicherten Daten per Funk oder mittels Infrarotlicht direkt an eine vorzugsweise stationäre Zentrale mit einem Zentralrechner (18) übermittelt werden und daß der Zentralrechner (18) ein Kartenlesegerät (19) zum Ablesen der mobilen Speicherkarten (17) und einen Drucker (20) zum Ausdrucken der im Zentralrechner (18) aufbereiteten Daten, vorzugsweise in Form von Rechnungen, aufweist.

8. Erfassungssystem nach einem der Ansprüche 1 bis 7, dadurch gekennzeichnet, daß die Hubmechanik zur Leerung zweier Behälter (1), d.h. zur Doppelschüttung, ausgebildet ist und daß die vorzugsweise als Hydrauliksteuerung ausgeführte Steuerung der Hubmechanik mit dem Schüttungsrechner (10) oder Bordrechner (15) vernetzt ist, wodurch eine Synchronisierung der Wägung und der Steuerung der Hydraulik realisiert ist, daß der Behälter (1) bzw. der Müllbehälter oder die Mülltonne mindestens zwei voneinander getrennte Kammern aufweist, in denen der Müll nach Müllarten getrennt ist und daß der Sammelbehälter (3) die Müllarten entsprechend getrennt aufnimmt, daß der Inhalt des zu entleerenden Behälters (1) über ein vorzugsweise der Hubmechanik zugeordnetes Kamerasystem oder über einen vorzugsweise der Hubmechanik zugeordneten Metallsensor hinsichtlich Metall und/oder über vorzugsweise der Hubmechanik zugeordnete chemische oder spektralanalytisch arbeitende Sensoren insbesondere hinsichtlich Farben, Lacke und sonstigen Chemikalien detektiert wird, wobei eine besondere Vorrichtung zum Aussondern bzw. Separieren von detektiertem Sondermüll vorgesehen ist, daß der Inhalt des Behälters (1) hinsichtlich seines Volumens vorzugsweise mittels Füllstandssensoren detektiert wird, wobei die Füllstandssensoren induktiv, kapazitiv oder nach dem Wirbelstromprinzip oder lichtoptisch arbeiten.

9. Erfassungssystem nach einem der Ansprüche 1 bis 8, dadurch gekennzeichnet, daß der Codeträger ohne eigene, d.h. interne Energieversorgung arbeitet, daß der Codeträger die erforderliche Energie beim Ablesevorgang induktiv über die Leseeinrichtung (5), vorzugsweise mittels Hochfrequenzwellen, erhält, daß das Identifizierungsmerkmal (4) auch ohne Energiezufuhr im Codeträger permanent gespeichert bleibt, daß der Codeträger einen miniaturisierten Sender und der Sammelbehälter (3) bzw. die Leseeinrichtung (5) einen miniaturisierten Empfänger aufweist, in einem Temperaturbereich zwischen -30° C und +75° C störungsfrei arbeitet, vorzugsweise abnehmbar am Behälter (1) angebracht, insbesondere ausschließlich mittels eines Spezialwerkzeugs vom Behälter (1) abnehmbar und vorzugsweise am Behälter (1) verblombt ist oder daß der Codeträger ortsfest am Behälter (1) angebracht ist, integraler Bestandteil des Behälters (1) ist und vorzugsweise in oder an einem Griff des Behälters (1) integriert oder angebracht ist.

10. Verfahren zum automatischen Erfassen von Müll mit einem Erfassungssystem nach einem der Ansprüche 1 bis 9, gekennzeichnet durch folgende Verfahrensschritte:
Einschieben einer mobilen Speicherkarte in den Bordrechner des Müllabfuhrwagens vor Arbeits- bzw. Fahrtbeginn;
Leeren des Müllbehälters, wobei
vor oder beim Anheben des Müllbehälters das Identifizierungsmerkmal von der Leseeinrichtung berührungslos abgelesen wird,
das Identifizierungsmerkmal über den Schüttungsrechner an den Bordrechner geleitet und dort abgespeichert wird,
das Gewicht des vollen Müllbehälters über die in der Hubmechanik vorgesehenen Kraftsensoren unter Kompensation dynamischer Einflüsse mittels mindestens eines Beschleunigungssensors ermittelt und ebenfalls über den Schüttungsrechner an den Bordrechner weitergeleitet wird;
Ablassen des entleerten Müllbehälters, wobei das Gewicht des entleerten Müllbehälters über die in der Hubmechanik vorgesehenen Kraftsensoren ebenfalls unter Kompensation dynamischer Einflüsse mittels mindestens eines Beschleunigungssensors ermittelt und ebenfalls über den Schüttungsrechner an den Bordrechner weitergeleitet wird;
Abspeichern der Gewichtsdifferenz, d.h. des Gewichts des entleerten Mülls im Bordrechner bzw. auf der mobilen Speicherkarte unter Zuordnung zu dem dazugehörenden, zuvor gelesenen Identifikationsmerkmal, wobei weitere Daten, wie beispielsweise Uhrzeit, Fahrzeugnummer oder dgl., ebenfalls dem Identifizierungsmerkmal zuordenbar sind;
Ausdrucken der ermittelten und zugeordneten Daten auf dem Protokolldrucker;
Entnahme der mobilen Speicherkarte aus dem Bordrechner am Ende der Fahrt;
Weitergabe der mobilen Speicherkarten an die Zentrale;
Lesen der Speicherkarte bzw. der auf der Speicherkarte gespeicherten Daten werden über ein Kartenlesegerät des Zentralrechners;
Auswerten der Daten durch den Zentralrechner zum Erstellen von Rechnungen, Statistiken und sonstigen Auswertungen mittels Drucker, Plotter oder dgl..

## Claims

1. Automatic collecting system for the collection of refuse, having a container (1) in the form of a refuse container or refuse bin, and a collection container (3) used for emptying the container (1) and associated with a refuse removal vehicle (2), the refuse removal vehicle (2) comprising a lifting mechanism for lifting the container (1) and the lifting mechanism comprising force sensors (9) for determining the weight of the full and the emptied refuse container (1), an identification feature (4) being associated with the container (1) and a reading device (5) for recognising or reading the identification feature (4) being associated with the collection container (3), a weighing device (6) for weighing the container (1) before and after emptying and a computer (7) with a memory unit for storing the difference in weight of the container (1) before and after it has been emptied with allocation of the identification feature being associated, characterised in that the identification feature (4) is contained in coded form in a code memory; in that the code memory is an electronic code memory that functions without wires and which contains the identification feature (4) in coded and unchangeable form; in that the reading device (5) detects the identification feature (4); in that in order to determine the weight whilst eliminating the mass moment of inertia, at least one acceleration sensor, preferably associated with the lifting mechanism is provided; and in that the acceleration sensor absorbs the acceleration of the refuse container (1) and corrects the result of the weighing process, taking account of the negative or positive acceleration.

2. Collection system according to Claim 1, characterised in that, for the corrected determination of the weight whilst eliminating the mass moment of inertia at least one inclination sensor is provided, adjacent the acceleration sensor associated with the lifting mechanism.

3. Collection system according to Claim 1, characterised in that an intermediate container is provided; in that the contents of the refuse container (1) are firstly emptied into the intermediate container; and in that the intermediate container is weighed together with the refuse that has been poured thereinto.

4. Collection system according to Claim 1 or Claim 2, characterised in that a pouring computer (10) is associated with the collecting container (3) or the refuse removal vehicle (2); in that the signal of the force sensors (9), representing the weight of the full and emptied refuse container (1) in each case, is advantageously transmitted via a measuring amplifier (11), to the pouring computer (10) which in turn controls the lifting mechanism; in that the measuring amplifier (11) comprises programmable intelligence in the form of a computer or microprocessor; and in that the microprocessor of the measuring amplifier (11) which linearises the measuring signals, compensates for the temperature and, if necessary, corrects errors.

5. Collection system according to any one of Claims 1 to 4, characterised in that the pouring computer (14) transmits the measuring signals to an onboard computer (15) which is preferably disposed in the driver's cab (14); in that the onboard computer (15) comprises a microprocessor (16) and, preferably, an internal clock, and coordinates the pouring process and the pouring computer (10); and in that a logging printer is preferably connected to the onboard computer (15).

6. Collection system according to Claim 5, characterised in that, in addition to the weight and the identification feature (4) of the refuse container (1), the vehicle number of the refuse removal vehicle (2) and the time of emptying are also detected and stored in the onboard computer (15); in that any information which can be preset by the operating staff can be stored in the onboard computer (14), with the association of the identification feature (4); in that the onboard computer (15) comprises mobile memory cards (17) as output media; and in that the memory cards (17) are used as input media for a preferably stationary central computer (18); in that the mobile memory cards (17) are preferably in the form of a credit card format; in that the memory cards (17) comprise their own energy supply in the form of a battery; and in that the memory card (17) is protected by screening against excess voltage and voltage discharge.

7. Collection system according to Claim 5 or Claim 6, characterised in that the data conducted to the onboard computer (15) or stored in the onboard computer (15) are transmitted by radio or by means of infra red light directly to a preferably stationary exchange with a central computer (18); and in that the central computer comprises a card reading device (19) for reading the mobile memory cards (17) and a printer (20) for printing out, preferably in the form of invoices, data prepared in the central computer (18).

8. Collection system according to any one of Claims 1 to 7, characterised in that the lifting mechanism is formed for emptying two containers (1), i.e. for a dual pouring process; and in that the control device of the lifting mechanism, which is preferably in the form of a hydraulic control device, is connected in the same network to the pouring computer (10) or the onboard computer (15), whereby the weighing process and the control of the hydraulics is synchronised; in that the container (1), refuse container or refuse bin comprises at least two chambers which are separate from one another, and in which the refuse is separated according to refuse type; and in that the collective container (3) receives the types of refuse in a correspondingly separate manner; in that the contents of the container (1) to be emptied are scanned with respect to metal by means of a camera system which is preferably associated with the lifting mechanism, or by means of a metal sensor preferably associated with the lifting means and/or is scanned with respect in particular to paints, varnishes and other chemicals by means of sensors operating chemically or spectroanalytically which are preferably associated with the lifting mechanism, a particular device for screening or separating detected hazardous waste being provided; in that the contents of the container (1) are scanned with respect to their volume, advantageously by means of filling status sensors, the filling status sensors operating inductively, capacitively, or according to the eddy current principle, or in a light optical manner.

9. Collection system according to any one of Claims 1 to 8, characterised in that the code memory operates without a dedicated, i.e. internal, energy supply; in that the code memory receives the necessary energy during the reading process inductively via the reading device (5), preferably by means of high frequency waves; in that the identification feature (4) remains permanently stored in the code memory, even without an energy supply; in that the code memory comprises a miniature transmitter, and the collection container (3) or the read device (5) comprises a miniature receiver, operates without interference in a temperature range of between -30°C and +75°C, is preferably mounted detachably on the container (1), and is, in particular, only detachable from the container (1) by means of a special tool, and is, preferably, sealed on the container; or in that the code memory is mounted on the container (1) in a manner secure with respect to its location, is an integral component of the container (1) and is preferably integrated in or mounted on a handle of the container (1).

10. Process for the automatic collection of refuse with a collection system according to any one of Claims 1 to 9, characterised by the following process steps:
insertion of a mobile memory card into the onboard computer of the refuse removal vehicle prior to the start of the operation or journey;
emptying of the refuse container; wherein
the identification feature is read by the reader device in a contact-free manner prior to or during the lifting of the refuse container;
the identification feature is transmitted via the pouring computer to the onboard computer and is stored there;
the weight of the full refuse container is determined by means of the force sensors provided in the lifting mechanism, dynamic influences being compensated by at least one acceleration sensor, and is, likewise, transmitted to the onboard computer by the pouring computer;
the emptied refuse container is released, the weight of the emptied refuse container is being determined by means of the force sensors provided in the lifting mechanism, dynamic influences likewise being compensated by means of at least one acceleration sensor, and is likewise transmitted to the onboard computer by the pouring computer;
the weight difference, i.e. the weight of the emptied refuse, is stored in the onboard computer or on the mobile memory card, with the allocation of the associated identification feature which was previously read, further data, such as, for example, the time, the vehicle number, or the like, likewise being allocated to the identification feature;
printing out of the determined and allocated data on the logging printer;
removal of the mobile memory card from the onboard computer at the end of the journey;
transfer of the mobile storage cards to the exchange;
reading of the memory cards or the data stored on the memory cards by means of a card-reading device of the central computer;
evaluation of the data by means of the central computer for the generation of invoices, statistics, and other evaluations by means of printers, plotters or the like.

## Revendications

1. Système de saisie automatique pour ordures et déchets, avec un récipient (1) constitué par exemple d'une poubelle et avec un réservoir collecteur (3) associé à un camion de voirie, réservoir collecteur (3) dans lequel sera déversé le contenu du récipient (1), le camion de voirie (2) présentant un mécanisme de levage pour soulever le récipient (1), mécanisme de levage présentant des capteurs de force (9) pour déterminer le poids du récipient (1) plein et vidangé, une marque d'identification (4) étant associée au récipient (1), et une unité de lecture (5) pour la détection ou la lecture de la marque d'identification (4), une installation de pesée (5) pour la pesée du récipient (1) avant et après la vidange ainsi qu'un ordinateur (7) avec une unité de mémoire pour la mise en mémoire de la différence des poids du récipient (1) avant et après sa vidange avec association de la marque d'identification étant associés au réservoir collecteur (3),
caractérisé par le fait que la marque d'identification (4) est contenue sous forme codée dans un support de code, par le fait que le support de code est un support de code électronique fonctionnant sans fil, qui contient la marque d'identification (4) sous une forme codée invariable, par le fait que l'unité de lecture (5) détecte la marque d'identification (4), par le fait que pour la détermination du poids avec élimination de l'inertie de masse il est prévu au moins un capteur d'accélération associé de préférence au mécanisme de levage et par le fait que le capteur d'accélération enregistre l'accélération de la poubelle (1) et corrige le résultat de la pesée compte tenu de l'accélération négative ou positive.

2. Système de saisie suivant al revendication 1, caractérisé par le fait que pour la détermination corrigée du poids avec élimination de l'inertie de masse il est prévu en complément un capteur d'inclinaison parallèlement au capteur d'accélération associé au mécanisme de levage.

3. Système de saisie suivant la revendication 1, caractérisé par le fait qu'un récipient intermédiaire est prévu et par le fait que le contenu de la poubelle (1) est d'abord transvasé dans le récipient intermédiaire qui est pesé avec la matière y déversée.

4. Système de saisie suivant la revendication 1 ou la revendication 2, caractérisé par le fait qu'au réservoir collecteur (3) ou au camion de voirie (2) est associé un ordinateur de calcul du poids en vrac (10), par le fait que c'est chaque fois le signal des capteurs de force (9) représentant le poids de la poubelle (1) pleine et vidangée qui est transmis de préférence par l'intermédiaire d'un amplificateur de mesure (11) à l'ordinateur de calcul du poids en vrac (10), lequel à son tour commande le mécanisme de levage, par le fait que l'amplificateur de mesure (11) présente une intelligence programmable dans le sens d'un ordinateur ou d'un microprocesseur, et par le fait que le microprocesseur de l'amplificateur de mesure (11) linéarise les signaux de mesure, procède à une compensation tenant compte de la température et procède le cas échéant à une correction d'erreur.

5. Système de saisie suivant l'une quelconque des revendications de 1 à 4, caractérisé par le fait que l'ordinateur de calcul du poids en vrac (10) transmet les signaux de mesure à un ordinateur de bord (15) disposé de préférence dans la cabine du conducteur (14), par le fait que l'ordinateur de bord (15) présente un microprocesseur (126) et de préférence une horloge interne et coordonne le déversement et l'ordinateur de calcul du poids en vrac (10) et par le fait qu'à l'ordinateur de bord (15) est connecté de préférence une imprimante de procès-verbal.

6. Système de saisie suivant la revendication 5, caractérisé par le fait qu'outre le poids et la marque d'identification (4) de la poubelle (1), c'est également le numéro du camion de voirie (2) et l'heure exacte de l'opération de vidange qui sont saisis et mis en mémoire dans l'ordinateur de bord (15), par le fait que dans l'ordinateur de bord (15) peuvent être mises en mémoire des informations de nature quelconque sélectionnées par le personnel de service avec association à la marque d'identification (4), par le fait que l'ordinateur de bord (15) présente des cartes à mémoire (17) mobiles en tant que support de sortie et par le fait que les cartes à mémoire (17) servent de support d'entrée pour un ordinateur central (18) de préférence stationnaire, par le fait que les cartes à mémoire mobiles (17) ont de préférence le format de cartes de chèque, par le fait que les cartes à mémoire (17) présentent une alimentation en énergie individuelle sous forme d'une batterie et par le fait que la carte à mémoire (17) est protégée par un blindage contre la surtension et la décharge de tension.

7. Système de saisie suivant la revendication 5 ou la revendication 6, caractérisé par le fait que les données transmises à l'ordinateur de bord (15) ou y mises en mémoire sont transmises par radio ou par lumière infrarouge directement à une centrale de préférence stationnaire équipée d'un ordinateur central (18) et par le fait que l'ordinateur central (18) présente une unité de lecture de carte (18) pour la lecture des cartes à mémoire mobiles (17) et une imprimante (20) pour l'impression des données en mémoire dans l'ordinateur central (18), de préférence sous forme de factures.

8. Système de saisie suivant l'une quelconque des revendications de 1 à 7, caractérisé par le fait que le mécanisme de levage est conçu pour la vidange de deux récipients (1), c'est-à-dire pour un double déversement et par le fait que la commande de préférence hydraulique du mécanisme de levage est interconnectée avec l'ordinateur de calcul du poids en vrac (10) ou avec l'ordinateur de bord, ce qui permet d'obtenir la synchronisation de l'opération de pesage et de la commande hydraulique, par le fait que le récipient d'ordures ou la poubelle (1) présente au moins deux compartiments séparés, dans lesquels les ordures sont déversées suivant leur nature, par le fait que le contenu du récipient (1) à vidanger est soumis par l'intermédiaire un système vidéo ou par l'intermédiaire d'un détecteur de métaux associé de préférence au mécanisme de levage à une opération de détection de métaux et/ou par l'intermédiaire de détecteurs chimiques ou fonctionnant suivant le principe de l'analyse spectrale associés de préférence au mécanisme de levage à une détection de produits chimiques notamment de couleurs, de vernis ou d'autre produits chimiques, une installation particulière pour la séparation ou le tri de déchets particuliers détectés étant prévue, par le fait que le volume du contenu du récipient (1) est déterminé au moyen de détecteurs de niveau, ces détecteurs de niveau fonctionnant suivant le principe par induction, capacitif ou de courants de Foucault, ou encore par voie optique.

9. Système de saisie suivant l'une quelconque des revendications de 1 à 8, caractérisé par le fait que le support de code est alimentée en énergie nécessaire lors de l'opération de lecture par induction par l'intermédiaire de l'unité de lecture (5), de préférence au moyen d'ondes haute fréquence, par le fait que même sans alimentation en énergie la marque d'identification (4) reste en mémoire de manière permanente dans le support de code, par le fait que le support de code présente un émetteur miniaturisé et que le réservoir collecteur (3) ou l'unité de lecture (5) présente un récepteur miniaturisé, fonctionne sans perturbations dans une fourchette de températures entre -30°C et +75°C, par le fait que le support de code est fixé de manière de préférence amovible sur le récipient (1), que de préférence il ne peut en être déposé qu'au moyen d'un outil spécial et qu'il est de préférence appliqué sous scellés au récipient (1) ou encore par le fait que le support de code est fixé de manière permanente au récipient (1), en fait partie intégrante et est de préférence fixé à une poignée du récipient (1) ou fait partie intégrante de cette poignée.

10. Procédé de saisie automatique de déchets ou d'ordures au moyen d'un système de saisie suivant l'une quelconque des revendications de 1 à 9, caractérisé parles phases opératoires suivantes :
Mise en place d'une carte à mémoire mobile dans l'ordinateur de bord du camion, de voirie avant le début du travail ou du ramassage d'ordures;
vidange de la poubelle, opération au cours de laquelle
avant le levage de la poubelle ou au cours de celui-ci la marque d'identification est lue sans contact par l'unité de lecture,
transmission de la marque d'identification par l'intermédiaire de l'ordinateur de calcul du poids en vrac vers l'ordinateur de bord et mise en mémoire dans cet ordinateur,
le poids de la poubelle chargée est à l'aide des capteurs de force prévus dans le mécanisme de levage déterminé avec compensation des influences dynamiques au moyen d'au moins un capteur d'accélération et est également transmis par l'intermédiaire de l'ordinateur de calcul du poids en vrac à l'ordinateur de bord;
mise en mémoire dans l'ordinateur de bord ou dans la carte à mémoire mobile de la différence des poids, à savoir du poids des ordures déversées avec association à la marque d'identification correspondante relevée au préalable, avec possibilité d'associer à la marque d'identification d'autres informations, comme par exemple l'heure, le numéro du camion de voirie ou similaires,
impression par l'imprimante de procès-verbal des informations obtenues et associées;
enlèvement de la carte à mémoire mobile de l'ordinateur de bord à la fin du circuit de ramassage;
transmission des cartes à mémoire mobiles vers la centrale;
lecture de la carte à mémoire ou des données mises en mémoire dans cette carte par une unité de lecture de l'ordinateur central;
analyse des données par l'ordinateur central pour l'établissement de factures, de statistiques ou d'autres documents à l'aide d'imprimantes, d'enregistreurs graphiques ou similaires.
